# EUROPÄISCHE PATENTSCHRIFT

(11) **EP 3 555 023 B1**
(45) Veröffentlichungstag und Bekanntmachung des Hinweises auf die Patenterteilung: **14.04.2021**
(21) Anmeldenummer: 17825419.9
(22) Anmeldetag: 12.12.2017
(51) Int. Cl.: C04B 37/00, C04B 37/02, C04B 37/04, B32B 18/00, F41H 5/04, E04F 15/08, C04B 35/645, B32B 3/14, B32B 7/022, B32B 7/04, B32B 7/12, B32B 9/00, B32B 9/04, B32B 15/04, B32B 17/06, F24C 15/00, F24C 15/04

(54) **TRANSPARENTER VERBUNDWERKSTOFF**
TRANSPARENT COMPOSITE
COMPOSITE TRANSPARENT

(30) Priorität: 14.12.2016 DE 102016224897
(43) Veröffentlichungstag der Anmeldung: 23.10.2019
(73) Patentinhaber: CeramTec-Etec GmbH, 53797 Lohmar (DE)
(72) Erfinder: SCHNETTER, Lars, 53518 Wimbach (DE); BREDE, Lukas, 53562 St. Katharinen (DE); ESCHENAUER, Helen, 56457 Westerburg (DE)
(74) Vertreter: Fehrenbacher, Eckhard Anton
(86) Internationale Anmeldenummer: PCT/EP2017/082312
(87) Internationale Veröffentlichungsnummer: WO 2018/108856

(56) Entgegenhaltungen:
- WO-A2-2015/176816
- US-A1- 2007 087 203
- US-A1- 2007 087 204
- US-A1- 2009 294 050
- HAISMA J ET AL: "Contact bonding, including direct-bonding in a historical and recent context of materials science and technology, physics and chemistry - Historical review in a broader scope and comparative outlook", MATERIALS SCIENCE AND ENGINEERING: R: REP, ELSEVIER, AMSTERDAM, NL, Bd. 37, Nr. 1-2, 5. April 2002 (2002-04-05), Seiten 1-60, XP004344542, ISSN: 0927-796X, DOI: 10.1016/S0927-796X(02)00003-7

## Beschreibung

Gegenstand der vorliegenden Erfindung ist ein transparenter Verbundwerkstoff für verschiedene Anwendungen aus kristallinem und amorphem Material mit neuartigen Materialeigenschaften.

Im Allgemeinen bestehen optische Komponenten und Bauteile aus Glas, Glaskeramik, Kunststoff, Einkristallen oder polykristalliner Keramik. Die Gruppen der Einkristalle und der polykristallinen Keramik erhalten ein stetig steigendes Interesse und Marktpotential, da sie gegenüber Gläsern, Glaskeramiken und Kunststoffen Vorteile wie höhere Kratzbeständigkeit, Formbeständigkeit, Temperaturbeständigkeit, Biegefestigkeit sowie einen höheren Widerstand gegen aggressive Medien aufweisen.

Gläser, Glaskeramiken und Kunststoffe sind allerdings Materialien, die in hoher Stückzahl und Sortenvielfalt zur Verfügung stehen und oft kostengünstiger produziert werden können als transparente Keramiken.

Als mögliche kostengünstigere Variante ist eine Verbindung von Gläsern, Glaskeramiken oder Kunststoffen mit Einkristallen oder polykristallinen Keramiken mittels organischen Zwischenschichten bzw. Haftvermittlern (Klebstoffen) bekannt. In der WO 2015/118079 A1 wird ein Bauteil beschrieben, das aus einem Substrat, einer polykristallinen Funktionsschicht (Dicke < 2 mm) und einem Haftvermittler besteht. Als Haftvermittler wird ein Klebstoff mit einem brechungsindexangepassten Brechungsindex genannt, der zwischen Substrat und Funktionsschicht vermittelt und Lichtreflektion durch Adaption der Phasenübergänge mindert. Die DE 10 2011 014 100 A1 beschreibt ein Bauteil, das aus einer Deckschicht aus polykristalliner Keramik oder Einkristallen, einem brechungsindexangepassten Klebstoff als Matrixmaterial und einer Glasscheibe besteht. Die Verwendung von organischen Klebstoffen kann für einzelne Anwendungen (s. nachfolgende Beispielanwendungen) einen nachteiligen Effekt im Hinblick auf die Temperatur-, Chemikalien- und Umweltbeständigkeit bewirken.

US2007/087203 und US2007/087204 beschreiben einen Verbundwerkstoff, wobei ein transparentes polykristallines AION mit einem Ba-Ga-Ge Glas ("BGG-Glas") ohne Verwendung eines verbindenden Materials durch Ansprengen verbunden ist. Sowohl Flachenfügung des Glases und Keramik als eine teilweise Kantenfügung der Keramik, wobei das Glas als Fügungsmaterial eingesetzt wird, wird gezeigt.

Im Bereich des Personenschutzes weisen transparente Einkristalle oder polykristalline Keramiken, die auf Glas und/ oder Kunststoff geklebt werden, eine höhere ballistische Schutzleistung auf als Glas oder Kunststoffe an sich. Dabei bietet sich ein Kachelverbund aus einzelnen Kacheln (Größe bis zu 400 x 400 mm) an. Diese Kachelverbundbauweise erfordert jedoch eine Verbindung mittels organischen Klebstoffen mit an den Werkstoff angepassten Brechungsindizes, um Lichtreflektionen und die Sichtbarkeit von Phasenübergängen gänzlich zu vermeiden.

Aufgrund der vorgenannten Nachteile ist diese Verklebetechnik im Gesamtsystem nur bedingt zu realisieren, da bereits die Fügung im Autoklaven extreme Bedingungen mit sich bringt oder auch eine direkte Exposition mit der Umwelt problematisch sein kann (UV-Beständigkeit und chemische Beständigkeit).

Zur Verwendung im architektonischen Bereich (beispielsweise begehbare Gläser) sind ebenfalls große Flächen notwendig, die sich durch eine Verbindung einzelner Keramikelemente bzw. -kacheln besonders bevorzugt erstellen lassen. Die Verbindung der Kacheln führt jedoch dazu, dass die Kanten sichtbar sind, was ästhetisch selten gewünscht ist. Die teils nachteilige Umweltbeständigkeit limitiert jedoch die Verwendung von Klebstoffen auf Basis organischer Polymere (Beanspruchungen durch Witterung, Salzwasser, etc.).

Zivile Anwendungen von transparenten Werkstoffen wie beispielsweise der Einsatz als Displayabdeckglas in Smartphones, Notepads oder Smart-Watches erfordern exzellente optische und mechanische Eigenschaften. Zudem sind dünne Bauteil-Ausführungen nötig, die sich im Smartphone-Sektor im Bereich < 2.000 µm, meist auch <1000 µm oder gar < 500µm bewegen. Bei diesen dünnen Wandstärken lassen sich Displayscheiben verbiegen, da die Biegesteifigkeit mit der dritten Potenz der Dicke drastisch abnimmt.

Die Aufgabe der vorliegenden Erfindung besteht darin, einen Verbundwerkstoff bereitzustellen, der die vorgenannten Nachteile nicht aufweist und insbesondere eine gegenüber kristallinen Werkstoffen verbesserte Biegefestigkeit und gegenüber Verbundwerkstoffen mit organischen Zwischenschichten eine verbesserte Chemikalien-, Temperatur- und Umweltbeständigkeit aufweist.

Gelöst wird die Aufgabe durch einen Verbundwerkstoff gemäß Anspruch 1. Die Unteransprüche geben bevorzugte Ausgestaltungen wieder. Die Ausgestaltungen können miteinander kombiniert werden.

Der erfindungsgemäße Verbundwerkstoff weist verbesserte Eigenschaften auf. Er kombiniert in besonderer Form die Vorteile der verschiedenen Werkstoffklassen miteinander und egalisiert Defizite der jeweiligen Werkstoffe.

Dies wird möglich durch einen transparenten Verbundwerkstoff, der dadurch charakterisiert ist, dass ein amorphes anorganisches Material stoffschlüssig mit einem transparenten kristallinen anorganischen Material verbunden ist. Das amorphe anorganische Material ist mit dem transparenten kristallinen anorganischen Material über eine transiente Verbindung zwischen erweichtem amorphen anorganischen Material und kristallinem anorganischen Material entstanden. Nach dem Abkühlen zeigt sich eine stoffliche Verbindung mit besonderer chemischer Verbindung inklusive einem ionischen Bindungsanteil. Direkte Verbindung im Sinne der vorliegenden Erfindung meint eine fügende Verbindung des amorphen anorganischen Materials und des transparenten, kristallinen anorganischen Materials ohne die Verwendung einer organischen Zwischenschicht bzw. eines Haftvermittlers. Erfindungsgemäß wird unter einer transienten Verbindung verstanden, dass das erweichte amorphe anorganische Material mit dem transparenten kristallinen anorganischen Material in Verbindung gebracht wird und sich eine fügende Verbindung ausbildet. Nach dem Abkühlen zeigt sich im Bereich der transienten Verbindung eine stoffliche, d.h. chemische, Verbindung. Das Erweichen des amorphen anorganischen Materials erfolgt bevorzugt durch Temperatureinwirkung. Das transparente kristalline anorganische Material, wird im Folgenden als kristallines anorganisches Material bezeichnet.

Der erfindungsgemäße Verbundwerkstoff besteht aus mindestens einer Schicht eines amorphen anorganischen Materials und mindestens einer Schicht eines transparenten kristallinen anorganischen Materials. Unter einer Schicht wird eine flächenhafte Farm, eine Kachel, Platte oder Fliese oder eine 3-dimensionale Form verstanden. Eine Schicht im Sinne der Erfindung ist ein handhabbares Teil mit geometrischen Abmessungen. Wenn mehrere Schichten des transparenten kristallinen anorganischen Material, insbesondere einer transparenten Keramik, übereinander vorliegen, ist die Gesamtdicke der mehreren Schichten vorzugsweise > 20 mm, noch bevorzugter > 30 mm und besonders bevorzugt > 40 mm.

Die erfindungsgemäß vorliegenden jeweils mindestens einen Schichten des amorphen anorganischen Materials und des transparenten kristallinen anorganischen Materials liegen in einer Ausgestaltung die nicht Teil der Erfindung ist, übereinander vor.

Übereinander bedeutet hierbei, dass eine Schicht des amorphen anorganischen Materials mit seiner großen Flachseite mit einer großen Flachseite einer Schicht des kristallinen anorganischen Materials in Verbindung gebracht wird. Es handelt sich dabei um eine Flächenfügung. Liegen jeweils mehrere Schichten des amorphen anorganischen und des kristallinen anorganischen Materials vor, sind diese bevorzugt abwechselnd angeordnet. Es handelt sich dabei um ein Sandwich aus mindestens 2 verschiedenen Materialen. Bei einem Sandwichverbund handelt es sich um einen Verbundwerkstoff, bei dem auf eine Keramikschicht eine Glasschicht aufgebracht ist, auf die wiederum eine weitere Keramikschicht aufgebracht ist.

Die erfindungsgemäß vorliegenden jeweils mindestens einen Schichten des amorphen anorganischen Materials und des transparenten kristallinen anorganischen Materials liegen nebeneinander vor. Nebeneinander bedeutet hierbei, dass die schmalen Flachseiten, des amorphen anorganischen und des kristallinen anorganischen Materials aneinander liegen. Es handelt sich dabei um eine Kantenfügung. Liegen mehr als jeweils eine Schicht der beiden Materialien vor, ähnelt diese Anordnung bevorzugt einem Schachbrett.

Erfindungsgemäß liegt die Schicht des transparenten kristallinen anorganischen Materials zumindest teilweise umgeben von einer Schicht des amorphen anorganischen Materials vor. Umgeben bedeutet hierbei, dass die Kanten des amorphen anorganischen und des kristallinen anorganischen Materials aneinander liegen und dass das amorphe anorganische Material sich zwischen den Kanten des kristallinen anorganischen Materials befindet. Diese Ausgestaltung ähnelt einem Verbund aus Fliesen (= kristallines anorganisches Material, auch Kachel oder Platte genannt) und Fugen (= amorphes anorganisches Material). Es liegt hierbei eine Kantenfügung vor.

Die Schicht des kristallinen anorganischen Materials ist in einer weiteren Ausgestaltung die nicht Teil der Erfindung ist, in das amorphe anorganische Material eingebettet. Eingebettet bedeutet hierbei, dass das amorphe anorganische Material das kristalline anorganische Material zumindest teilweise, bevorzugt vollständig umschließt. Es liegt eine Kantenfügung und zumindest teilweise eine Flächenfügung vor.

Das amorphe Material ist ausgewählt unter Glas und/oder Metall. Das kristalline Material ist ausgewählt unter Einkristallen und/ oder polykristalliner Keramik. Polykristalline Keramiken werden ausgewählt aus einer Liste aus Oxiden der Verbindungen mit Al und/ oder Mg und/oder Yttrium; Nitride, Oxinitride oder Sulfide des Aluminiums oder Siliziums; Oxide aus Zirkonium und/oder Yttrium; Aluminiumoxinitride; Zinksulfid; Siliziumcarbid, Borcarbid, Bornitrid, Kohlenstoff, Lanthan-dotiertes Blei-Zirkonat-Titanat oder Fluorid aus Ca und/oder Mg und/oder Aluminium mit bis zu 5% Dopanden aus der Gruppe der Lanthanoiden und/oder Actinoide und/oder Eisen- oder nicht-Eisenmetalle oder Mischungen daraus. Für die vorliegende Erfindung ist eine kubische polykristalline Oxidkeramik des Systems Aluminium, Aluminium-Magnesium oder Aluminium-Yttrium oder Zirkonoxid oder Zirkonoxid-Yttrium oder Aluminiumoxinitrid bevorzugt.

In einer Ausgestaltung des Verbundwerkstoffs die nicht Teil der Erfindung ist, liegen amorphe anorganische Schichten aus unterschiedlichen Materialien getrennt durch eine Schicht eines kristallinen anorganischen Materials vor. In einer weiteren Ausgestaltung des Verbundwerkstoffs liegen kristalline anorganische Schichten aus unterschiedlichen Materialien getrennt durch eine Schicht eines amorphen anorganischen Materials vor.

In einer weiteren Ausgestaltung die nicht Teil der Erfindung ist, liegen die amorphen anorganischen Schichten aus verschiedenen Materialien als graduierte Schichten, d.h. Schichten, die mit einem Gradienten versehen sind, vor. Diese Ausgestaltung findet sich vorrangig bei Flächenfügungen.

Das amorphe anorganische Material einer Schicht ist mit dem transparenten kristallinen anorganischen Material der angrenzenden Schicht über eine transiente Verbindung direkt verbunden, die zwischen erweichtem anorganischen Material und kristallinem Material entstanden ist, vorzugsweise durch Verwendung eines Vakuumofens, eines normalen Ofens (ein Atmosphärenofen, d.h. ein Gas- oder Elektroofen unter normaler Erdatmosphäre), eines thermischen Härteofens, einer Heißpresse, einer Heißisostatpresse, Schnellsinterfahren wie Field-Assisted-Sintering Technology oder Spark-Plasma-Sintering. Dabei kann sich eine Reaktionszone an der Stelle ausbilden, wo das amorphe Material und das kristalline Material aufeinandertreffen. Nach dem Abkühlen zeigt sich eine stoffliche Verbindung, nämlich eine stoffschlüssige/chemische Verbindung. In einer Ausgestaltung besitzt der entstandene Werkstoff im amorphen anorganischen Anteil und/oder im transparenten kristallinen Keramikanteil mechanische Spannungen, entstanden durch Differenzen der Wärmeausdehnungskoeffizienten der Materialien. In einer Ausgestaltung liegt zumindest teilweise eine Druckspannung im amorphen Anteil, in einer weiteren Ausgestaltung liegt zumindest teilweise eine Druckspannung im kristallinen Anteil, in einer bevorzugten Ausgestaltung liegt zumindest teilweise eine Druckspannung in beiden Werkstoffen vor. In einer bevorzugten Ausgestaltung der Erfindung weist der kristalline Materialanteil des Verbundwerkstoffs nach der Fügung zumindest teilweise eine Druckspannung > 10 MPa, bevorzugt >100 MPa und besonders bevorzugt >300 MPa auf. in einer weiteren Ausgestaltung weist der amorphe Materialanteil zumindest teilweise eine Druckspannung > 10 MPa, bevorzugt >100 MPa und besonders bevorzugt >300 MPa auf. In einer weiterhin bevorzugten Ausgestaltung weisen der kristalline anorganische Materialanteil und der amorphe anorganische Materialanteil jeweils zumindest teilweise eine Druckspannung > 10 MPa, bevorzugt >100 MPa und besonders bevorzugt >300 MPa auf.

Die chemische Verbindung bildet sich bevorzugt aus, wenn das amorphe anorganische Material während der Fügung eine minimale Viskosität von log(η) ≤15, vorzugsweise log(η) ≤ 13, besonders bevorzugt log(η) ≤ 8 besitzt. Die Einheit der Viskosität η ist üblicherweise Poise oder dPas (1 Poise = 1 dPas, d.h. z.B. η= 10¹⁵ Poise oder dPas). Das amorphe anorganische Material wird erhitzt. Dies ist besonders vorteilhaft, da der amorphe Werkstoff erweicht. Dabei ändert sich die Viskosität des amorphen Materials. Eine charakteristische Temperatur ist die untere Entspannungsgrenze oder der Erweichungspunkt T_{G}. Bei letzterem setzt üblicherweise eine progressive Längenzunahme ein, die in dilatometrischen Experimenten gemessen wird. Oberhalb von T_{G} vergrößert sich das Volumen deutlich, da der Wärmeausdehnungskoeffizient ansteigt, bis das Material vollständig erweicht, was auch zur Steigerung der Verspannung genutzt werden kann.

Mit zunehmender Temperatur werden zudem die Benetzung der Materialien und die Diffusionskoeffizienten begünstigt. Daher müssen die mindestens zwei Schichten, die mindestens zwei Layer, aus denen der Verbundwerkstoff besteht idealerweise an den Fügungsstellen keine extrem hohe Oberflächengüte (z.B. geschliffen, poliert, feinpoliert) aufweisen. Der Verbundwerkstoff lässt sich vorzugsweise durch das Fügen polierter Flächen mit einer Rauigkeit Ra < 1 µm, bevorzugt < 0,1 µm und besonders bevorzugt < 0,01 µm erstellen. Der Verbundwerkstoff ist generell innerhalb des Transformationsbereiches des amorphen anorganischen Materials, bspw. Glas, herstellbar. Beim Unterschreiten der oben genannten Viskosität von log(η) = 15, besser log(η) ≤13, noch besser log(η) ≤ 8 des mindestens einem amorphen anorganischen Material entsteht der Verbundwerkstoff. In einer Ausgestaltung gleicht die Schicht des amorphen anorganischen Materials die Unebenheiten auf der Schicht des kristallinen anorganischen Materials aus.

Insbesondere für die Anforderungen im Bereich des Personenschutzes, beispielsweise bei Schutzfenstern oder architektonischen Gläsern, ergibt sich durch den erfindungsgemäßen Verbundwerkstoff eine überraschend umfassende Lösung, die die bisher existierenden Fragestellungen und Probleme beseitigt.

In der Erfindung wird der Verbundwerkstoff nur durch stoffschlüssige (chemische) Verbindung mindestens einer Schicht amorphen anorganischen Materials mit mindestens einer Schicht kristallinen anorganischen Materials erzeugt. Da auf eine haftvermittelnde Schicht, beispielsweise einen organischen Klebstoff, verzichtet wird, stellt die häufig problematische Umweltbeständigkeit des Haftvermittlers kein Problem dar.

In einer alternativen Ausgestaltung wird der Verbundwerkstoff aus mindestens drei Schichten sowohl durch stoffschlüssige Verbindung mindestens einer Schicht amorphen anorganischen Materials mit mindestens einer Schicht kristallinen anorganischen Materials als auch durch eine haftvermittelnde Schicht zwischen mindestens zwei Schichten innerhalb des Verbundwerkstoffs gebildet. Die mindestens zwei mittels Haftvermittler verbundenen Schichten sind in Bezug auf das Material gleich oder verschieden.

Die erfindungsgemäße Lösung stellt also einen Verbundwerkstoff auf Basis einer chemischen, stoffschlüssigen Verbindung mindestens zweier Materialien (amorph und kristallin, also beispielsweise Glas und Keramik) dar.

Es hat sich dabei gezeigt, dass erfindungsgemäß durch die Auswahl eines amorphen anorganischen Materials, vorzugsweise eines Glases, welches einen Brechungsindex > 1,6, vorzugsweise ≥ 1,65 und besonders bevorzugt ≥ 1,7 aufweist, wobei es insbesondere im VIS-Bereich einen Brechungsindex aufweist, der dem des kristallinen Werkstoffs (z. B. n = 1,7 ± 0,03 für Magnesiumaluminiumspinell) entspricht, und welches einen Wärmeausdehnungskoeffizienten (WAK) aufweist, der nicht mehr als 0,5·10⁻⁶ K⁻¹ höher als der des kristallinen Werkstoffes ist, ein umweltstabiler, optisch homogener und ballistisch leistungsfähiger, großflächiger Verbundwerkstoff geschafften werden kann. Die WAK sind definiert als das mittlere thermische Alpha (Differenz der relativen Längenänderung) zwischen zwei Temperaturen. Die Messung der WAK erfolgt in Schubstangendilatometern. In einer Ausgestaltung liegt der Verbundwerkstoff aufgrund der Kantenfügung jeweils mindestens einer Schicht des amorphen anorganischen und des kristallinen anorganischen Materials großflächig vor. Großflächig bedeutet in diesem Fall die Fläche, die durch die mindestens zwei Schichten nebeneinander liegend erzielt wird.

Der WAK des amorphen Materials ist größer, kleiner oder gleich, bevorzugt gleich dem WAK des kristallinen anorganischen Materials.

In einer Ausgestaltung haben die WAK der verwendeten Materialien zweier aufeinanderfolgender Schichten aus amorphen anorganischen und kristallinen anorganischen Material mit Flächen und/oder Kantenfügung bei Temperaturen von 20 - 300 °C einen WAK-Unterschied ΔWAK ≥ 0,1·10⁻⁶ K⁻¹, vorzugsweise ΔWAK ≥ 3·10⁻⁶ K⁻¹, besonders bevorzugt ΔWAK ≥ 6·10⁻⁶ K⁻¹ und der WAK des amorphen anorganischen Materials, insbesondere des Glases, ist kleiner als der WAK des kristallinen anorganischen Materials, insbesondere der transparenten Keramik. Dadurch erreicht man eine Druckverspannung der Fügezone, der Zone, in der das amorphe anorganische Material auf das kristalline anorganische Material trifft, bzw. dem sich ausbildenden Bereich, in dem das amorphe anorganische Material und das kristalline anorganische Material miteinander verbunden werden.

In einer alternativen Ausgestaltung lässt sich zwischen den zwei Temperaturen von 20 - T(log(η)= 15)°C, d.h. die Temperatur bei der das Glas eine Viskosität von lg(η)=15 aufweist, und einem ΔWAK ≥ 0,5·10⁻⁶ K⁻¹, bevorzugt ΔWAK ≥ 3·10⁻⁶ K⁻¹, besonders bevorzugt ΔWAK ≥ 6·10⁻⁶ K⁻¹, wobei der WAK des amorphen anorganischen Materials kleiner als der WAK des kristallinen anorganischen Materials ist, ein vergleichbarer Effekt erzielen.

Durch die Verwendung amorpher anorganischer Materialien, die in Bezug auf den Brechungsindex auf die kristallinen anorganischen Materialien angepasst sind, d.h. dem Brechungsindex der kristallinen anorganischen Materialien ähneln, bevorzugt entsprechen, kann vermieden werden, dass optische Störungen im Werkstoff auftreten. Das heißt, es kommt nicht zur Totalreflexion an den Grenzflächen des Übergangs des amorphen anorganischen Materials zum kristallinen anorganischen Material. Bevorzugt sind daher Gläser als amorphes anorganisches Material. Die Totalreflexion tritt bei herkömmlich verbundenen kristallinen Kacheln mit verschiedenen Materialien mittels Haftvermitter oft insbesondere bei senkrechter Betrachtung auf und führt bei einer Abweichung von Δn ≥ 0,02 im Brechungsindex (nFügezone < nKeramik) schon zu einem Spiegeln (Reflexion) im Bereich der Verbundzone. Des Weiteren ist der Verbundwerkstoff im Gegensatz zu den aus dem Stand der Technik bekannten Verbindungen mit Haftvermittler auch langfristig umweltstabil, d.h. selbst bei direkter Exposition zur Umwelt. Zusätzlich ist er auch im Autoklavierprozess beständig.

Bei den amorphen anorganischen Materialien, vorzugsweise den Gläsern, gibt es trotz der hohen Brechungsindizes, die zur Kombination mit kristallinen anorganischen Materialien wie Spinell (MgAl₂O₄) (n=1,72) oder Saphir (Al₂O₃) (n=1,76) oder Yttrium-Aluminium-Granat (YAG) mit n>1,8 im erfindungsgemäßen Verbundwerkstoff notwendig sind, eine große Auswahl. Diese Gläser erreichen die hohen Brechungsindizes durch höhere Anteile an Barium-, Blei-, Schwefel oder auch Lanthan. Die Gläser sind daher bevorzugt ausgewählt unter Lanthankrongläsern (LAK), die Lanthanflintgläsern (LaF), Schwer-Lanthanflintgläsern (LaSF) Schwer-Bariumflintgläsern (BaSF), Schweren Flintgläsern (NSF) und/oder Bariumflintgläser (BaF). Diese Gläser gewährleisten hervorragende UV-Beständigkeiten, Feuchtigkeitsbeständigkeiten, Festigkeiten und breite Variationsmöglichkeiten bezüglich des WAK sowie der Transformationstemperaturen. Auch eine hohe chemische Beständigkeit ist mit diesen Gläsern realisierbar. In einer Ausgestaltung ist das amorphe Material ein Glas mit 0-15 Mol-% Lanthan, 0-15 Mol-% Blei, 0-15 Mol-% Barium sowie Bor, Silizium und oder Aluminium und oder Bor. In einer bevorzugten Ausgestaltung ist das amorphe anorganische Material ein Glas mit > 0 bis ≤15 Mol-% Lanthan und/oder > 0 bis ≤ 15 Mol-% Blei und/oder >0 bis ≤15 Mol-% Barium. Das Glas enthält bevorzugt weiterhin Bor, Silizium und/oder Aluminium.

In einer weiteren bevorzugten Ausgestaltung ist das amorphe anorganische Material ein Glas mit 10-50 Gew-% Lanthanoxid, 1-20 Gew-% Calciumoxid, 25- 45 Gew-% Boroxid. Dieses Glas kann bevorzugt zusätzlich Bariumoxid, Antimonoxid, Magnesiumoxid, Siliziumoxid, Strontiumoxid, Titanoxid, Zinkoxid, Yttriumoxid, und/oder Zirkonoxid oder Mischungen daraus enthalten.

Die Brechungsindizes des amorphen anorganischen Materials und des kristallinen anorganischen Materials weichen in einer bevorzugten Ausführungsform um weniger als 0,4, bevorzugt um weniger als 0,2 und besonders bevorzugt um weniger als 0,15 bei λ = 550-650 nm voneinander ab. Dies wird bevorzugt bei Flächenfügungen toleriert.

In einer weiteren Ausgestaltung wird der Verbundwerkstoff aus mehreren Schichten in Form von Fliesen des kristallinen anorganischen Materials, bevorzugt der Keramik, bevorzugt mit einer Größe von 20x20 mm bis 300x300 mm, besonders bevorzugt von 20x20mm und/oder 300x300mm, bevorzugt quadratisch, als Vieleck oder als Rechteck, die von einer Matrix des amorphen anorganischen Material umgeben sind, ausgebildet. Dadurch ergibt sich eine glatte, vorzugsweise eine planare, Fläche. Diese Gestaltung optimiert neben der Optik und Umweltbeständigkeit des Verbundwerkstoffes, auch die ballistische Leistungsfähigkeit über existierende Lösungen hinaus. Die Schichten des kristallinen anorganischen Materials werden durch das amorphe anorganische Material im Sinne von Fliese und Fuge verbunden. Durch eine Verringerung der Verbundbreite, d.h. durch eine Verringerung der Breite der Fuge aus dem amorphen anorganischen Material (Fugenbreite), kann die ballistische Leistungsfähigkeit einer monolithischen Keramik erzielt werden, die eine bessere Leistungsfähigkeit besitzt als der Kanten- oder Triple-Punkte-Bereich einer Multi-Tile-Lösung. Die Leistungsfähigkeit ist messbar im v50-Beschuss. Dies liegt unter anderem an einer Impedanz des Glasanteils, der Funktion von Dichte und Schallgeschwindigkeit, die deutlich näher an der des kristallinen Werkstoffes liegt als bspw. bei der Verwendung von organischen Klebstoffen, bei denen Dichte und Schallgeschwindigkeit deutlich niedriger sind. Auch die besseren mechanischen Eigenschaften des amorphen anorganischen Materials und die etwaigen eingebrachten Verspannungen verbessern die Leistungsfähigkeit im Vergleich zum Stand der Technik.

Es zeigt sich auch, dass der erfindungsgemäße Verbundwerkstoff im Biegeversuch auf ≥30% der Biegefestigkeit eines monolithischen Werkstoffes kommt. Somit kann durch eine Minimierung des Glasanteils im Verbundwerkstoff eine maximale Beschusssicherheit im Vergleich zur monolithischen Lösung gewährleistet werden.

Bei Fugenbreiten von > 0,1 mm, bevorzugt > 0,4 mm, besonders bevorzugt > 0,7 mm wird die sich beim Auftreffen des Projektils bildende und das kristalline anorganische Material der Fliese zerstörende Schockwelle vom Übergang in die nächste Fliese abgehalten. Durch diesen Verbundwerkstoff wird zwar im Bereich der breiteren Fuge aus amorphen anorganischen Material die ballistische Leistung im Vergleich zu einer Fuge mit geringerer Breite reduziert, aber die -Beständigkeit bei mehrfachen Beschuss deutlich erhöht, da die Schockwelle im Bereich der breiten Fuge endet.

Basierend auf der hohen Festigkeit in der Verbundzone ist die Herstellung von Teilen mit einer selbsttragenden Flächenausdehnung der planaren Flächen des Verbundwerkstoffes größer 100x100 mm², größer 1000x1000 mm², oder sogar größer oder gleich 2000x2000 mm² möglich, die ursprünglich aus einzelnen kristallinen Kacheln mit einem geringen Glasanteil gefügt werden müssen. Dies ist sogar gewährleistet bei einer Dicke des kristallinen anorganischen Materials von > 1 mm, für ballistische Verwendungen eignen sich insbesondere > 5 mm, um Projektile zu brechen. Die oben erwähnten großen Flächenausdehnungen sind als selbsttragendes monolithisches Teil selbst über die in DE102011014100 beschriebene Vorgehensweise nicht möglich.

In einer weiteren Ausgestaltung sind gleiche oder unterschiedliche 3-dimensionale geometrische Formen, bevorzugt Kugeln, Zylinder und Pyramiden, aus dem kristallinen anorganischen Material in einer Matrix aus amorphen anorganischen Material eingebettet und/oder von der Matrix aus amorphen anorganischen Material umgeben. Vorteilhafterweise ist dann der WAK des amorphen anorganischen Materials größer als der des kristallinen anorganischen Materials, da dadurch das Volumenverhältnis des amorphen anorganischen Materials, insbesondere Glas, zum kristallinen anorganischen Material, bevorzugt einer Keramik, deutlich größer und somit das kristalline anorganische Material, unter Druckspannung gesetzt. Dies führt zu einer noch weiter verbesserten Leistungsfähigkeit. Der Verbundwerkstoff dieser Ausgestaltung weist eine ausgezeichnete Zug-, Biege- und Kratzfestigkeit auf, da die besten Werkstoffeigenschaften der Grundwerkstoffe ideal kombiniert werden. Dies trifft insbesondere auf dünne Verbundwerkstoffe mit einer Dicke des kristallinen Anteils < 2 mm, bevorzugt < 0,6 mm, besonders bevorzugt <0,3 mm im Verbund mit dickeren amorphen Anteilen, insbesondere den Glasanteilen zu, da der kristalline Werkstoff bei optimal angepasstem WAK teilweise oder vollständig unter Druckspannung gesetzt wird und über eine direkte, starre Abstützung durch das amorphe anorganische Material verfügt. Darüber hinaus kann der amorphe Anteil, insbesondere der Glasanteil in einer besonders bevorzugten Form der Ausgestaltung durch thermische oder chemische Härtung weiter verstärkt werden.

Die Schicht aus dem kristallinen anorganischen Material ist in einer bevorzugten Ausführung dünner als die Schicht aus dem amorphen anorganischen Material. Das Verhältnis von kristalliner zu amorpher Schicht liegt bevorzugt bei 1:2, besonders bevorzugt bei 1:5, insbesondere bevorzugt bei 1:10. Dadurch werden auch bei mehreren kristallinen Schichten nebeneinander auf einer großen Fläche, Kanten, d.h. die schmalen Flachseiten der geometrischen 3-dimensionalen Formen nahezu unsichtbar, bevorzugt unsichtbar. So lassen sich planare Flächen aus dem Verbundwerkstoff erzeugen, die eine maximale Flächenausdehnung größer 100x100 mm², oder größer 1000x1000 mm² oder sogar größer 2000x2000 mm² aufweisen. Die kristallinen Schichten haben dabei vorzugsweise eine Dicke von < 5 mm, bevorzugt < 2 mm, besonders bevorzugt < 0,2 mm. Werden Dicken < 500µm, < 250 µm, oder sogar < 150 µm verwendet, sind die Fügestellen bei einer planaren Gestaltungsweise schon ab einem Abstand > 50 cm kaum noch sichtbar und somit ästhetisch ansprechend. Dadurch können auch sehr große Flächen gegen verkratzen oder ein Abreiben des Rutschhemmprofils geschützt werden. Solche Flächen eignen sich besonders für beispielsweise transparente begehbare Bodengläser, transparente Treppenstufen oder Beleuchtungsgläser großer Leuchten. Die Verspannung wird dadurch erreicht, dass die Wärmeausdehnungskoeffizienten zwischen amorphem und kristallinem Material aufeinander abgestimmt oder ausgelegt sind. Als Referenztemperaturen werden hierbei der WAK zwischen 20-300 °C und zwischen 20 °C und der Temperatur gewählt, bei der der log(η) = 15 beträgt. Diese Temperaturen sind glasabhängig, d.h. Materialkenngrößen. Die Auslegung der Wärmeausdehnungskoeffizienten der jeweiligen Anteile des Verbundwerkstoffes ist abhängig vom Volumenverhältnis zwischen amorphem und kristallinem Material. Bei einer Kantenfügung, d.h. bei einer Anordnung der verschiedenen Schichten nebeneinander oder wenn das amorphe anorganische Material das kristalline anorganische Material umgibt, ist das Verhältnis zwischen amorphen und kristallinem Material (amorph / kristallin) < 1, bevorzugt < 0,2 und besonders bevorzugt < 0,1. Bei einer Flächenfügung, d.h. einer Anordnung übereinander oder eingebettet, ist das Verhältnis zwischen amorphen und kristallinem Material > 1, bevorzugt 5 und besonders bevorzugt 10.

Eine besonders vorteilhafte Ausführung ergibt sich somit aus der Abstimmung der Wärmeausdehnungskoeffizienten:
bei Kantenfügung: Das amorphe anorganische Material umgibt bzw. befindet sich neben dem kristallinen anorganischen Material. Es wird unter Druckspannung gesetzt, wenn der Wärmeausdehnungskoeffizient des amorphen Materials kleiner als des kristallinen Materials (WAKₐₘₒᵣₚₕ < WAKₖᵣᵢₛₜₐₗₗᵢₙ) ist. Dabei weichen die Wärmeausdehnungskoeffizienten bei Temperaturen von 20 - 300 °C und einem Volumenverhältnis vom amorphen anorganische Material zu kristallinem anorganischem Material von < 1, bevorzugt < 0,2 und besonders bevorzugt < 0,1, um ΔWAK ≥ 0,1-10-6 K-1, bevorzugt um ΔWAK ≥ 3-10-6 K-1, besonders bevorzugt um ΔWAK ≥ 6-10-6 K-1, voneinander ab. Die Wärmeausdehnungskoeffizienten können bei Temperaturen von 20 - (Tlog(η)= 15)°C und einem Volumenverhältnis vom amorphen Material zu kristallinem Material von < 1, bevorzugt < 0,2 und besonders bevorzugt < 0,1, auch um ΔWAK ≥ 0,1-10-6 K-1, bevorzugt um ΔWAK ≥ 3-10-6 K-1, besonders bevorzugt um ΔWAK ≥ 6-10-6 K-1, voneinander abweichen. Dabei ist die Schicht aus kristallinem anorganischem Material vorzugsweise von der amorphen anorganisch Schicht umgeben, d.h. ähnlich dem System aus Fliese und Fuge, wobei die Schicht aus dem kristallinen anorganischen Material deutlich großflächiger, d.h. länger und/oder breiter, als die Schicht aus amorphem anorganischem Material, wobei das Flächen-Verhältnis amorph zu kristallin ≤1:2, bevorzugt ≤1:5, besonders bevorzugt ≤ 1:10, insbesondere bevorzugt von ≤1:100 ist. Die Breite der amorphen anorganischen Schicht zwischen zwei kristallinen anorganischen Schichten beträgt dabei vorzugsweise < 5 mm, bevorzugt < 2 mm, besonders bevorzugt < 0,2 mm. bei Flächenfügung: (nicht Teil der Erfindung) Das kristalline Material befindet sich über bzw. eingebettet in dem amorphen anorganischen Material. Es wird unter Druckspannung, d.h. mechanische Spannung, gesetzt, wenn der Wärmeausdehnungskoeffizient des amorphen Materials größer als der des kristallinen Materials (WAKₐₘₒᵣₚₕ > WAKₖᵣᵢₛₜₐₗₗᵢₙ) ist. Dabei weichen die Wärmeausdehnungskoeffizienten bei Temperaturen von 20 - 300 °C und einem Volumenverhältnis vom amorphen anorganischem Material zu kristallinem anorganischem Material von > 1, um ΔWAK ≥ 0,1.10⁻⁶ K⁻¹, bevorzugt um ΔWAK ≥3·10⁻⁶ K⁻¹, besonders bevorzugt um ΔWAK ≥6·10⁻⁶ K⁻¹, voneinander ab. Die Wärmeausdehnungskoeffizienten können bei Temperaturen von 20 - T(log(η)= 15)°C und einem Volumenverhältnis vom amorphen Material zu kristallinem Material von > 1, auch um ΔWAK ≥ 0,5·10⁻⁶ K⁻¹, bevorzugt um ΔWAK ≥ 3·10⁻⁶ K⁻¹, besonders bevorzugt um ΔWAK ≥6·10⁻⁶ K⁻¹, voneinander abweichen. In einer Ausgestaltung, in der die Schichten übereinander angeordnet sind, ist die Schicht aus amorphem anorganischem Material vorzugsweise deutlich dicker (höher) als die Schicht aus kristallinem anorganischem Material, wobei das Dicken/Höhen-Verhältnis kristallin zu amorph ≤ 1:2, bevorzugt ≤ 1:4, besonders bevorzugt ≤ 1:8 ist. Die Dicke/Höhe der kristallinen anorganischen Schicht beträgt dabei vorzugsweise < 5 mm, bevorzugt < 2 mm, besonders bevorzugt < 0,2 mm.

Die resultierende Druckspannung des kristallinen anorganischem und/oder des amorphen anorganischem Materialanteils ist dann nach der Fügung zumindest teilweise > 10 MPa, bevorzugt >100 MPa, besonders bevorzugt >300 MPa.

Es ist jedoch auch möglich, von den beiden oben genannten Fällen abzuweichen, um andere Eigenschaften des erfindungsgemäßen Verbundwerkstoffs, wie einen besonderen Brechungsindex oder eine besondere Beständigkeit gegen Chemikalien zu erreichen. Hier sind Abweichungen von ΔWAK ≤ 6·10⁻⁶ K⁻¹, bevorzugt ΔWAK < 2·10⁻⁶ K⁻¹, besonders bevorzugt ΔWAK < 0 K⁻¹ möglich. Von besonderer Bedeutung sind hier die Verbundflächen. Je größer die Verbundfläche desto geringer muss die Abweichung von den oben genannten Fällen sein, um die erforderliche Materialqualität zu erreichen.

In einer weiteren Ausgestaltung weichen die linearen Wärmeausdehnungskoeffizienten von 20 - T(log(η)= 15)°C zwischen amorphem anorganischen Material und kristallinem anorganischen Material um weniger als ΔWAK = 0,5·10⁻⁶ K⁻¹ ab. Dies ist insbesondere bei Verbundwerkstoffen mit sehr großen Fugenbreiten bzw. Verbundzonen gewünscht, um einen spannungsfreien Zustand zu erreichen.

In einer weiteren Ausgestaltung liegt ein vorgespannter und steifer Verbundwerkstoff vor, der eine Sandwichstruktur aufweist. Die äußeren Lagen bestehen aus dem kristallinen anorganischem Material und die innere Matrix aus dem amorphen anorganischen Material. Durch diese Sandwichbauweise des Verbundwerkstoffs lassen sich ultra-steife Gläser mit hoher Festigkeit erzeugen. Eine besonders bevorzugte Anwendung ist die als Deckglas in Tauchcomputern. Die Steifigkeit und Festigkeit des erfindungsgemäßen Verbundwerkstoffs nähert sich dabei der Festigkeit der Deckschichten an, die jeweils im günstigen Falle unter Druckspannung stehen.

Simulationen an einem Sandwich-Verbundwerkstoffs aus kristallinem-amorphenkristallinem anorganischem Material, bevorzugt Keramik-Glas-Keramik zur Abschätzung der Beanspruchbarkeit haben Druckspannungen in der Schicht aus kristallinem anorganischem Material und eine Festigkeitssteigerung um mindestens den Faktor 2 zur Grundfestigkeit des kristallinen anorganischem Material ergeben. Das Dickenverhältnis zwischen der Schicht aus kristallinem anorganischem Material und der Schicht aus amorphen anorganischem Material, bevorzugt Glas, des Verbundwerkstoffs wurde hierzu auf 1:4 festgesetzt, die Differenz in den Wärmedehnungen auf ΔWAK= 5·10⁻⁶ K⁻¹. Vorteilhaft ist auch ein Verhältnis von 1:8 oder mehr, da dadurch die Druckspannung in der Schicht aus kristallinem anorganischem Material weiter erhöht wird. Durch die direkte chemische Verbindung innerhalb des Verbundwerkstoffes kann der keramische Anteil auch bei limitierter Gesamtdicke, wie beispielsweise bei Gläsern für das Mobilfunkdisplay oder Notebooks, eine Dicke von 250 µm und weniger unterschreiten. D.h. der besonders bevorzugte und erfindungsgemäße Effekt lässt sich auch bei Gesamtdicken < 1mm, < 0,6mm oder sogar <0,4mm erzeugen.

Neben dem oben genannten Einbringen von Druckeigenspannungen lässt sich der Verbundwerkstoff auch durch thermisches oder chemisches Verspannen des amorphen Anteils weiter verstärken. So wird in einer Ausgestaltung zusätzlich zu dem unter Druckspannung stehenden kristallinem anorganischen Materials auch das amorphe anorganische Material unter Druckspannungen gesetzt. Dies gelingt, indem die Außenhülle des Glasanteils im Verbundwerkstoff durch die oben genannten Härte-/ Vorspannprozesse unter Druckeigenspannungen gesetzt wird. Das thermische Härten und die Erzeugung des Verbundwerkstoffes können dabei in einem Prozess im Härteofen vollzogen werden.

Ein weiterer Vorteil des Verbundwerkstoffs liegt in den verbesserten optischen Eigenschaften, die durch sehr dünne Schichten des kristallinen anorganischen Materials erreicht werden. Die Transmission steigt an und Haze (Weißtrübung) sowie Fleckenhäufigkeit werden minimiert

Dies ist besonders vorteilhaft für Uhren, Kameralinsen, Laserschutzbrillen, Scannerscheiben und Mobiltelefone. Weiterhin wirken sich dünne Schichten kostenmindernd aus. In dünneren Schichten liegen i.d.R. weniger Fehlstellen vor, so dass eine höhere optische Qualität erzielt werden kann. Dadurch sinkt der Ausschuss. Darüber hinaus ist ein geringerer Rohstoffeinsatz nötig und durch die Nutzung großserientauglicher Prozesse aus der Glasveredelung können die Prozesse vereinheitlicht werden.

Bei der Verwendung dünner kristalliner Schichten < 200 µm, bevorzugt < 100 µm werden sichtbare Linien (an den Kanten durch Totalreflexion) vermieden, wodurch wiederum die Bauteiloptik verbessert wird.

Die Temperaturbeständigkeit des erfindungsgemäßen Verbundwerkstoffes ist im Vergleich zu Verbundwerkstoffen mit organischen Klebstoffen deutlich verbessert, da das kristalline anorganische Material i.d.R. über Schmelztemperaturen > 1500 °C verfügt und das amorphe anorganische Material bei vergleichsweise hohen Temperaturen für technische Anwendungen erweicht. Daraus ergibt sich eine Temperaturbeständigkeit von mindestens > 400 °C, bevorzugt > 600 °C.

Der erfindungsgemäße Verbundwerkstoff kann in vielen verschiedenen technischen Gebieten verwendet werden, die zum Teil bereits in der vorliegenden Einleitung erwähnt sind. Die nachfolgenden möglichen Einsatzgebiete des Verbundwerkstoffes sollen die Erfindung jedoch nicht nur darauf limitieren.

Im Personenschutz können die erfindungsgemäßen Verbundwerkstoffe beispielsweise für ballistische Schutzscheiben verwendet werden. Die Schockbeständigkeit und der Widerstand gegenüber Umwelteinflüssen sind dabei von entscheidender Bedeutung. Die Verbundwerkstoffe haben aufgrund des kristallinen Materials eine höhere ballistische Schutzleistung, so dass die Scheiben aus dem Verbundwerkstoff dünner ausgeführt werden können. So weisen Scheiben aus dem Verbundwerkstoff ein geringeres Flächengewicht auf als vergleichbare auf Glas basierende Scheiben (Panzerglas).

Der Einsatz in zivilen Applikationsfeldern, in denen meist relativ dünne Werkstoffbauteile eingesetzt werden, ist mit dem neuen, erfindungsgemäßen Verbundwerkstoff ebenfalls möglich.

Ein Beispiel dafür ist die Verwendung im Bereich der Architektur (z. B. begehbare Gläser). Durch eine dauerhafte Vermeidung von Kratzern oder eine Gewährleistung der Rutschhemmung (ein Rutschhemmprofil läuft sich nicht ab, bzw. wird anderweitig nicht verschlissen) bieten kristalline Werkstoffe im architektonischen Bereich erhebliche, auch sicherheitsrelevante Vorteile.

Die gewünschte Kratzbeständigkeit ist bei ständiger Beanspruchung im öffentlichen Bereich mit amorphen Materialien, insbesondere Gläsern nur schwer zu realisieren. Gleiches gilt für eine dauerhaft profilierte rutschfeste Oberfläche. Der Verbundwerkstoff, bei dem das kristalline Material, insbesondere die transparente Keramik, auf der Außenseite angeordnet ist, kann also die Vorteile von amorphen und kristallinen Materialien verbinden.

Eine andere Anwendung für den erfindungsgemäßen Verbundwerkstoff ist die Verwendung als große Fenster im Hochtemperaturbereich (>600°C). Dabei kann ebenfalls nur schwer ein rein kristallines Material genutzt werden, wobei einzelnen Teile durch eine organische Matrix verbunden sind, da die Temperaturbeständigkeit der organischen Verbindungen zumeist nicht ausreicht. Ein erfindungsgemäßer Verbundwerkstoff kann im Gegensatz dazu aber ohne Probleme eingesetzt werden. Zusätzlich ist der Einsatz des erfindungsgemäßen Verbundwerkstoffes in Anwendungen möglich, die sehr dünne Schichten erfordern. So kann der erfindungsgemäße Verbundwerkstoff als Displayabdeckglas in Smartphones, Notepads oder Smart-Watches verwendet werden (Schichtdicken von < 2.000 µm, meist auch <1000 µm oder gar < 500µm). Diese Displayabdeckgläser erfordern exzellente optische (> 90 % relative Transmission, niedrige Weißtrübung (Haze)) und mechanische Eigenschaften (hohe Festigkeit, ausgezeichnete Kratzbeständigkeit, hoher Widerstand gegen Sharp-Impact).

Nachteilig an den bisher verwendeten Gläsern ist, dass diese Gläser weiterhin kratzempfindlich sind und bei Durchstoßen der Druckeigenspannungszone eine Zerstörung des Glases einsetzt. So lassen sich alle Gläser mit mineralischen Stoffen von einer Mohs-Härte ≤ 6 zerkratzen und durchstoßen. Das bedeutet viele gängige natürliche mineralischen Materialien wie Sand, Stein, Beton, Asphalt, Glas, etc. beim Aufprall (Sharp Impact) einer Glaskomponente auf diesen zu starkem Zerkratzen oder zum Versagen (Bruch) führen. Rein kristalline Materialien haben oft einen hohen Widerstand gegen Zerkratzen, sind auch resistenter gegen Sharp-Impact auf Grund ihrer hohen Druckfestigkeit, weisen aber niedrige Zug- bzw. Biegefestigkeiten auf.

Eine weitere mögliche Applikation ist die der gewölbten Flächen, wie beispielsweise bei Helmvisieren. Eine gewölbte Fertigung der kristallischen Werkstoffe ist extrem aufwendig und kostenintensiv. Bei Verwendung dünner rein kristalliner Materialien werden diese jedoch biegsam, sodass auch stark gewölbte Flächen wie Helmvisiere möglich werden. Einen Einsatz verhindert bisher die nicht mehr ausreichende mechanische Stabilität bei zu geringen Wandstärken. Der erfindungsgemäße Verbundwerkstoff weist diese mechanische Stabilität aber auf.

Ein Gebiet in dem ein Bedarf an mechanisch besonders steifen aber dennoch sehr festen Gläsern gefragt ist, ist der Bereich der Druckfenster, wie beispielsweise bei Tauchcomputern. Wünschenswert sind dabei besonders dünne Gläser. Bei Gläsern ist die Dicke meist durch die maximale Durchbiegung limitiert (E-Modul >120 GPa), Der Einsatz von kristallinen Materialien ist aufgrund der zuvor beschriebenen limitierten Festigkeit und teils auch aufgrund von zu hohen Kosten nicht möglich. Der erfindungsgemäße Verbundwerkstoff ist jedoch günstiger in der Produktion und weist auch die nötige Festigkeit auf.

Auch im Bereich optisch anspruchsvoller Applikationen (z. B. optische Linsen) haben rein kristalline Materialien ein ausgesprochen hohes Potential. Optische Anwendungen erfordern Fehlerfreiheit, hohe Transmission und eine niedrige Weißtrübung ("Haze").

Doch obwohl die kristallinen Werkstoffe häufig besonders wünschenswerte Eigenschaften haben wie Brechungsindizes >2,1 (Zirkonoxid), eine hohe Härte (Spinell oder Aluminiumoxid), eine Möglichkeit zu großen Dopandenanteilen (YAG) oder auch die hohe Temperaturbeständigkeit, die jeweils bei der Verwendung amorpher Werkstoffe limitiert ist, ist eine Verwendung häufig problematisch. Dies liegt daran, dass eine Transparenz nahe der theoretisch möglichen Transparenz bei kristallinen Materialen ggü. amorphen Materialien erheblich schwieriger zu erreichen ist und durch zusätzliche Absorption, Streuung (durch mehr Grenzflächen der Kristalle oder Poren) und einen höheren Reflektionsanteil limitiert wird.

Besonders vorteilhaft für eine hohe Transmission sind hingegen Dicken < 2 mm, da die Lichttransmission einem exponentiellen Zusammenhang in Abhängigkeit der Materialdicke folgt und Absorptions- und Streueffekte stark abnehmen. Wie zuvor beschrieben nimmt jedoch auch die mechanische Beständigkeit der Teile erheblich mit Abnahme der Dicke ab, sodass die Teile aus kristallinen Materialien nicht beliebig dünn hergestellt, aber auch angewendet werden können.

Ganz allgemein beseitigt der erfindungsgemäße Verbundwerkstoff sowohl die Nachteile der amorphen Materialien als auch die der kristallinen, keramischen Materialien. Befindet sich das kristalline Material auf der Außenseite des Bauteils wird die Kratzbeständigkeit erhöht und das Verhalten bei einem harten Aufprall verbessert. Andererseits werden durch die Kombination mit einem (darunterliegenden) amorphen Material die Biegefestigkeitseigenschaften des Verbundwerkstoffs deutlich verbessert und der Einsatz von keramischen Materialien für verschiedenste Anwendungen möglich.

Darüber hinaus kann der erfindungsgemäße Verbundwerkstoff auch für weitere spezielle Anwendungen genutzt werden.

Eine solche Anwendung ist die Verwendung als Laminate für IR-Anwendungen. Das in WO2015118079 A1 beschriebene System hat darüber hinaus den Nachteil, dass selbst wenn Substrat und kristalliner Werkstoff eine hohe Transmission über einen breiten Wellenlängen-Bereich besitzen (z.B. Spinell 200nm-6000 nm), die Transmission erheblich beeinflusst wird durch die Verwendung von organischen Haftvermittlern, da die Transmission dieser Stoffe entweder oft bei max. 3000 nm begrenzt ist, da sie hier einen erheblichen Anteil des Lichts absorbieren oder Streuen, oder aber einfach chemisch deutlich weniger beständig sind, was eine Anwendung in vielen Bereichen ausschließt. Dies ist insbesondere für Anwendungen wie Messgeräte die im IR-Bereich agieren wichtig, beispielsweise Pyrometer, Nachtsichtgeräte, IR-Kameras, Spektrometer etc.

Erfindungsgemäß können mit dem Verbundwerkstoff infrarotdurchlässige Teile mit verbesserten Eigenschaften gegenüber dem Stand der Technik erzeugt werden für die Verwendung als Pyrometer, Nachtsichtgeräte, IR-Kameras, Spektrometer. Zum einen ist die IR-Durchlässigkeit gegenüber organischen Klebstoffen bis hin zu höheren Wellenlängen (< 4.000 - 5.000 nm) möglich. Es können sogar IRdurchlässige Gläser bis zu einer Wellenlänge von 12.000 nm genutzt werden, wobei dann das kristalline Material die transmissionsbegrenzende Komponente darstellt. Zum anderen sind amorphe Glaswerkstoffe deutlich umweltbeständiger (z.B. durch UV-Licht oder sauren Regen). Es ergeben sich IR-transparente Verbundwerkstoffe, die im Bereich von λ= 2.000 nm bis 4.000 nm eine Transmission > 70 %, bevorzugt > 80 % und besonders bevorzugt > 85 % aufweisen.

Eine weitere spezielle Anwendung des erfindungsgemäßen Verbundwerkstoffes sind transparente Applikationen im medizinischen Bereich, beispielsweise die Verwendung von Optiken im Körperinneren. Besondere Vorteile von Werkstoffen wie Saphir oder Spinell ist deren Inertheit bzw. Biokompatibilität, sowie deren hohe chemische und mechanische Beständigkeit im Vergleich zu amorphen Lösungen wie Glas. Mehrteilig ausgeführte Gehäuse aus kristallinen Werkstoffen für den in-vivo-Einsatz können durch zugeschnittene Glas-Fügeteile verbunden werden. Damit ergibt sich erstmalig eine bioinerte und dichte Abschottung. Als besonders bevorzugt gilt die lokale Erhitzung mittels Laser von niedrigschmelzenden Gläsern (< 500 °C), um das elektronische Innenleben zu schützen.

Ein weiteres Gebiet bei der die Verwendung kristalliner Werkstoffe von großem Interesse ist die Herstellung und Verwendung von Röhren, da diese durch ihre hohe Härte besonders kratzbeständig sind und somit die Oberflächenqualität langfristig erhalten bleibt. Darüber hinaus sind auch wiederum die chemische Beständigkeit und die optischen Merkmale, wie die besonderen Brechungsindizes, von Interesse. Problematisch gerade bei Röhren mit einem großen Länge-zu-Durchmesserverhältnis ist die Innenpolitur dieser Röhren. Diese ist teils gar nicht oder nur unter extremem Aufwand möglich.

Um die erforderliche Transparenz bei Keramikrohren herzustellen, ist eine aufwendige und teilweise unmögliche Innenpolitur notwendig. Wenn ein Keramikrohr außen und ein Glasrohr innen miteinander verbunden werden, der Verbundwerkstoff also ein röhrenförmiges Element ist, ist der Prozess der Innenpolitur nicht mehr erforderlich. Der Außenmantel des Keramikrohrs ist poliert ausgeführt, wobei der Innenmantel lediglich vorgeschliffen oder feingeschliffen ist. Keramik- und Glasrohr werden z.B. in einem Vakuumofen im Transformationsbereich des Glases verbunden. Das Glasrohr erweicht und verbindet sich mit der Keramik an der Grenzfläche Keramik-Glas, gleicht die Flächen an, sodass eine transparente Fläche entsteht. Durch die Temperaturbehandlung selbst wird auch die Innenfläche des Glasanteils transparent. Das anorganisch kristalline Material des erfindungsgemäßen, röhrenförmigen Verbundwerkstoffs steht in einer bevorzugten Form unter Druckeigenspannung.

Zusammenfassend kann der erfindungsgemäße Verbundwerkstoff also verwendet werden für Displays, ballistische Schutzgläser, Brillenglas, Uhrgläser, Treppenböden, begehbare Gläser, Tauchcomputer, Bodeneinbauleuchten, Scanner-Gläsern, Visiere, Sensoren, Kamerafenster, optische Linsen, Ofenfenster, Maschinenscheiben oder Gehäuse zur Verwendung im Körper. Dadurch verbessert sich insbesondere die Schockbeständigkeit gegenüber weichen (im Verhältnis zu den kristallinen Werkstoffen) Gegenständen (z.B. Stahlkugeln), durch den harten kristallinen Werkstoff wird das Sharp-Impact-Verhalten signifikant verbessert. Aus dem Verbundwerkstoff resultieren gegenüber den bestehenden Werkstofflösungen deutlich robustere Produkte.

Die Erfindung wird durch die folgenden Figuren und Beispiele veranschaulicht.

Diese zeigen:
- Fig. 1: einen Verbundwerkstoff (1), bestehend aus mehreren Schichten des transparenten kristallinen anorganischen (2) und amorphen anorganischen Materials (3) (umgebend angeordnet)
- Fig. 2: einen Verbundwerkstoff (1), bestehend aus mehreren Schichten des transparenten kristallinen anorganischen (2) und amorphen anorganischen Materials (3) (übereinander angeordnet) (nicht Teil der Erfindung)

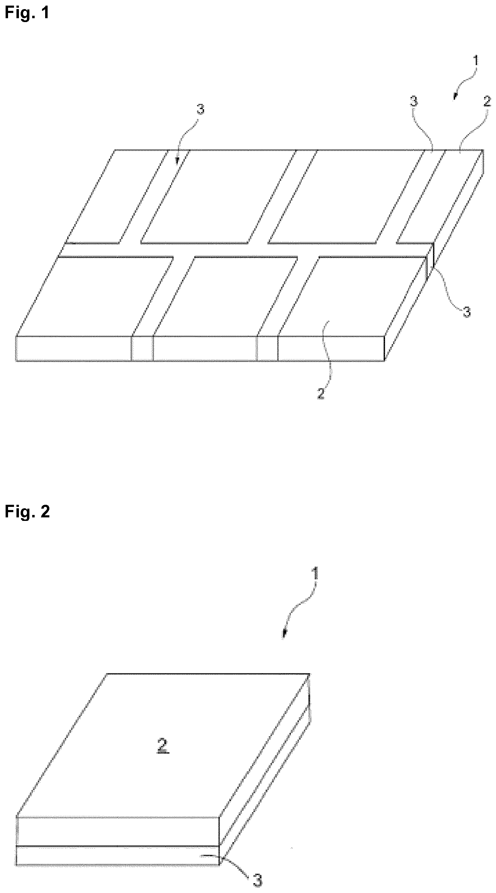

Figur 1 zeigt ein Ausführungsbeispiel eines erfindungsgemäßen Verbundwerkstoffs 1. Dieser besteht in diesem Ausführungsbeispiel aus Schichten des kristallinen anorganischen Materials 2, die umgeben sind von Schichten des amorphen anorganischen Materials 3. Die kristallinen anorganischen Schichten 2 können wie gezeigt unterschiedliche Außenmaße aufweisen. Wie oben beschrieben können die kristallinen anorganischen Schichten 2 so positioniert sein, dass das amorphe anorganische Material 3 diese wie eine Fuge verbindet. Anschließend wird diese Anordnung temperiert, wodurch der Verbundwerkstoff 1 entsteht.

Figur 2 zeigt einen Verbundwerkstoff 1, der aus Schichten des kristallinen anorganischen Materials 2 und Schichten des amorphen anorganischen Materials 3, die übereinander angeordnet sind, besteht. Die kristallinen anorganischen Schichten 2 und die amorphen anorganischen Schichten 3 können wie gezeigt unterschiedliche Außenmaße aufweisen. Anschließend wird diese Anordnung temperiert, wodurch der Verbundwerkstoff 1 entsteht.

Bezugszeichen:
1 Verbund
2 kristallines anorganisches Material
3 amorphes anorganisches Material

### Beispiel 1 :

Es wurden 2 und 4 Keramikkacheln aus Magnesium-Aluminium-Spinell, der Größe 90x90x7 mm und 45x45x7 mm mit einem Glas der Dicke 500µm, das einen Brechungsindex von n = 1,72 ± 0,03 bei λ = 588 nm, einen WAK von 7,0·10⁻⁶ K⁻¹ bei einer Temperatur zwischen 20 und 300°C und einen Transformationsbereich von -610-680°C besitzt, zusammen auf mehr als 600°C erhitzt, gehalten und kontrolliert abgekühlt. Die Anordnung ergab einen planaren flächigen Verbundwerkstoff mit Kantenfügung, bei dem das amorphe anorganische Material dass kristalline anorganische Material teilweise umgibt.

Nach Überschreiten der unteren Entspannungsgrenze des Glases, kam es zur Ausbildung einer Kantenfügung zwischen Glas und Keramik und die Verbundzone stand unter Druckspannung. Der so hergestellte Verbundwerkstoff besaß im Verbundbereich eine Transmission >70% im VIS-Bereich, es war keine Totalreflexion festzustellen. UV-Tests, Klimabeständigkeit entsprechend Mil-Standard und eine Weiterverarbeitung im Autoklaven bei Temperaturen >80°C und einem Druck >4 bar waren gewährleistet bzw. fehlerfrei durchzuführen.

### Beispiel 2: (nicht Teil der Erfindung)

Auf eine Magnesium-Aluminium-Spinellkeramik mit einer Größe von 150x100x0,2 mm, planar, beidseitig poliert wurde ein Borosilikatglas der Dicke 1 mm, mit einem Transformationsbereich zwischen 620°C und 700°C, eine WAK von 7,0·10⁻⁶ K⁻¹ gelegt (übereinander) und bei einer Temperatur zwischen 20 und 300°C in einem Ofen thermisch zu einem Verbundwerkstoff so verbunden, dass das Bauteil optisch homogen geworden ist und eine Transmission > 80% aufweist. Die Behandlungstemperatur lag bei > 600°C.

Der so hergestellte Verbundwerkstoff weist eine Flächenfügung zwischen dem kristallinen anorganischen und dem amorphen anorganischen Material auf und wurde anschließend auf einer Stahlunterlage liegend mit einer Zwick-Prüfmaschine bei 500N und einer Stahlkugel mit einem Durchmesser von 10mm belastet, ohne Beschädigung des Verbundwerkstoffs.

### Beispiel 3

In einen weiteren Test wurde der in Beispiel 2 entstandene Verbundwerkstoff einem für den Glaswerkstoff üblichen chemischen Härtevorgang unterzogen. Der so entstandene Verbundwerkstoff besaß bei einer RING-on-Ring Biegefestigkeitsprüfung eine Gesamtfestigkeit von σ ∼ 580 MPa

### Beispiel 4

In einem weiteren Beispiel wurde wie in Beispiel 2 vorgegangen, jedoch besaß das verwendete Glas einen WAK von 10,4·10⁻⁶ K⁻¹ bei einer Temperatur zwischen 20 und 300°C, eine Dicke von 800 µm und die Keramik eine Dicke von 200 µm. Hieraus wurde durch Fügen im Ofen ein Sandwichverbund hergestellt.

Gegenstand der vorliegenden Erfindung ist ein transparenter Verbundwerkstoff für verschiedene Anwendungen aus kristallinem und amorphem anorganischen Material mit verbesserten Materialeigenschaften.

## Patentansprüche

1. Flächiger Verbundwerkstoff aus Schichten mindestens eines transparenten kristallinen anorganischen Materials stoffschlüssig mittels Kantenfügung verbunden mit mindestens einer Schicht aus mindestens einem amorphen anorganischen Material, wobei die Kanten des amorphen anorganische Materials und des kristallinen anorganischen Materials aneinander liegen und das amorphe anorganische Material sich zwischen den Kanten des kristallinen anorganischen Materials befindet,
wobei das mindestens eine transparente kristalline anorganische Material ausgewählt ist unter Oxiden der Verbindungen mit Al und/ oder Mg und/oder Yttrium, Nitride, Oxinitride oder Sulfide des Aluminiums oder Siliziums; Oxide aus Zirkonium und/oder Yttrium; Aluminiumoxinitrid, Zinksulfid; Siliziumcarbid, Borcarbid, Bornitrid, Kohlenstoff, Lanthan-dotiertes Blei-Zirkonat-Titanat oder Fluorid aus Ca und/oder Mg und/oder Aluminium mit bis zu 5% Dopanden aus der Gruppe der Lanthanoide bzw. Actanoide bzw. Eisen oder nicht-Eisenmetalle oder Mischungen daraus,
und die Breite der mindestens einen Schicht des mindestens einem amorphen anorganischen Materials zwischen zwei kristallinen anorganischen Schichten > 0,1 mm und < 5 mm beträgt

2. Verbundwerkstoff nach einem der vorhergehenden Ansprüche, **dadurch gekennzeichnet, dass** das transparente kristalline anorganische Material ausgewählt ist unter polykristallinen Oxidkeramiken der Systeme Al, Al-Mg, Al-Y, Zr, Zr-Y, AION, bevorzugt unter Mg-Al-Spinell, Saphir und/oder Yttrium-Aluminium-Granat.

3. Verbundwerkstoff nach einem der vorhergehenden Ansprüche, **dadurch gekennzeichnet, dass** das amorphe anorganische Material ein Glas ist, ausgewählt unter Lanthankrongläsern, Lanthanflintgläsern, Schwer-Lanthanflintgläsern, Schwer-Bariumflintgläsern, schweren Flintgläsern und/oder Bariumflintgläsern.

4. Verbundwerkstoff nach Anspruch 4, **dadurch gekennzeichnet, dass** das Glas 10-50 Gew% Lanthanoxid, 1-20 Gew% Calciumoxid, 25-45 Gew% Boroxid und ggf. Bariumoxid, Antimonoxid, Magnesiumoxid, Siliziumoxid, Strontiumoxid, Titanoxid, Zinkoxid, Yttriumoxid, Zirkonoxid oder Mischungen daraus umfasst.

5. Verbundwerkstoff nach Anspruch 4 oder 5, **dadurch gekennzeichnet, dass** der Brechungsindex des Glases um weniger als 0,15 (λ 550-650 nm) vom Brechungsindex des kristallinen anorganischen Materials abweicht.

6. Verbundwerkstoff nach einem der Ansprüche 4 - 6, **dadurch gekennzeichnet, dass** das Glas einen Brechungsindex > 1,6, vorzugsweise ≥ 1,65 und besonders bevorzugt ≥ 1,7 aufweist.

7. Verbundwerkstoff nach einem der vorhergehenden Ansprüche, **dadurch gekennzeichnet, dass** das amorphe anorganische Material und/oder das kristalline anorganische Material im Verbundwerkstoff zumindest teilweise eine Druckspannung > 10 MPa, bevorzugt > 100 MPa und besonders bevorzugt > 300 MPa aufweisen.

8. Verbundwerkstoff nach einem der vorhergehenden Ansprüche, **dadurch gekennzeichnet, dass** amorphe anorganische Material während der Herstellung eine minimale Viskosität von log(η) ≤15, vorzugsweise log(η) ≤ 13, besonders bevorzugt log(η) ≤ 8 aufweist.

9. Verbundwerkstoff nach einem der vorhergehenden Ansprüche, **dadurch gekennzeichnet, dass** das kristalline anorganische Material großflächiger ist als das amorphe anorganische Material, wobei das Flächen-Verhältnis amorph zu kristallin ≤ 1:2, bevorzugt ≤ 1:5, besonders bevorzugt ≤ 1:10, ist.

10. Verbundwerkstoff nach einem der vorhergehenden Ansprüche, **dadurch gekennzeichnet, dass** die Wärmeausdehnungskoeffizienten zwischen den zwei Temperaturen von 20 - 300 °C und einem Volumenverhältnis vom amorphen anorganischen Material zu kristallinem anorganischen Material von < 1, bevorzugt < 0,2 und besonders bevorzugt < 0,1, ΔWAK ≥ 0,1·10⁻⁶ K⁻¹, bevorzugt ΔWAK ≥3·10⁻⁶ K⁻¹ , besonders bevorzugt ΔWAK ≥6·10⁻⁶ K⁻¹, voneinander abweichen, wobei der WAKₐₘₒᵣₚₕ kleiner als der WAKₖᵣᵢₛₜₐₗₗᵢₙ ist.

11. Verbundwerkstoff nach einem der vorhergehenden Ansprüche, **dadurch gekennzeichnet, dass** die Breite der Fuge aus amorphen anorganischen Schicht zwischen zwei kristallinen anorganischen Schichten < 2 mm bevorzugt < 0,2 mm beträgt.

12. Verbundwerkstoff nach einem der vorhergehenden Ansprüche, **dadurch gekennzeichnet, dass** die transparente kristalline Schicht in Form einer Kachel eine Dicke von > 1mm, bevorzugt > 5mm aufweist.

13. Verbundwerkstoff nach einem der vorhergehenden Ansprüche, **dadurch gekennzeichnet, dass** der Verbund durch das Fügen von Flächen mit einer Rauigkeit Rₐ < 1 µm, bevorzugt < 0,1 µm besonders bevorzugt < 0,01 µm hergestellt wurde.

14. Verwendung des Verbundwerkstoffes nach einem der vorhergehenden Ansprüche als Display, ballistisches Schutzglas, Brillenglas, Uhrglas, Treppenboden, begehbares Glas, Tauchcomputer, Bodeneinbauleuchte, Scanner-Glas, Visier, Sensor, Kamerafenster, optische Linse, Ofenfenster oder Maschinenscheibe.

## Claims

1. Flat composite material made of layers of at least one transparent crystalline inorganic material integrally bonded, by means of edge joining, to at least one layer made of at least one amorphous inorganic material, wherein the edges of the amorphous inorganic material and of the crystalline inorganic material lie against one another and the amorphous inorganic material is located between the edges of the crystalline inorganic material,
wherein the at least one transparent crystalline inorganic material is selected from oxides of the compounds comprising Al and/or Mg and/or yttrium, nitrides, oxynitrides or sulfides of aluminum or silicon; oxides from zirconium and/or yttrium; aluminum oxynitride, zinc sulfide; silicon carbide, boron carbide, boron nitride, carbon, lanthanum-doped lead zirconate titanate or fluoride from Ca and/or Mg and/or aluminum with up to 5% dopants from the group of lanthanides or actinides or iron or non-ferrous metals or mixtures thereof,
and the width of the at least one layer of the at least one amorphous inorganic material between two crystalline inorganic layers is > 0.1 mm and < 5 mm.

2. Composite material according to any of the preceding claims, **characterized in that** the transparent crystalline inorganic material is selected from polycrystalline oxide ceramics of the systems Al, Al-Mg, Al-Y, Zr, Zr-Y, AION, preferably from Mg-AI spinel, sapphire, and/or yttrium aluminum garnet.

3. Composite material according to any of the preceding claims, **characterized in that** the amorphous inorganic material is a glass selected from lanthanum crown glasses, lanthanum flint glasses, heavy lanthanum flint glasses, heavy barium flint glasses, heavy flint glasses, and/or barium flint glasses.

4. Composite material according to claim 4, **characterized in that** the glass comprises 10-50 wt.% lanthanum oxide, 1-20 wt.% calcium oxide, 25-45 wt.% boron oxide, and optionally barium oxide, antimony oxide, magnesium oxide, silicon oxide, strontium oxide, titanium oxide, zinc oxide, yttrium oxide, zirconium oxide, or mixtures thereof.

5. Composite material according to either claim 4 or claim 5, **characterized in that** the refractive index of the glass deviates by less than 0.15 (λ 550-650 nm) from the refractive index of the crystalline inorganic material.

6. Composite material according to any of claims 4-6, **characterized in that** the glass has a refractive index of > 1.6, preferably ≥ 1.65, and particularly preferably ≥ 1.7.

7. Composite material according to any of the preceding claims, **characterized in that** the amorphous inorganic material and/or the crystalline inorganic material in the composite material have, at least in part, a compressive stress of > 10 MPa, preferably > 100 MPa, and particularly preferably > 300 MPa.

8. Composite material according to any of the preceding claims, **characterized in that** the amorphous inorganic material has a minimum viscosity of log(η) ≤ 15, preferably log(η) ≤ 13, particularly preferably log(η) ≤ 8, during production.

9. Composite material according to any of the preceding claims, **characterized in that** the crystalline inorganic material has a larger area than the amorphous inorganic material, the area ratio of amorphous to crystalline material being ≤ 1:2, preferably ≤ 1:5, particularly preferably ≤ 1:10.

10. Composite material according to any of the preceding claims, **characterized in that** the coefficients of thermal expansion between the two temperatures of 20 and 300 °C and at a volume ratio of amorphous inorganic material to crystalline inorganic material of < 1, preferably < 0.2, and particularly preferably < 0.1, differ from one another by ΔCTE ≥ 0.1·10⁻⁶ K⁻¹, preferably ΔCTE ≥ 3·10⁻⁶ K⁻¹, particularly preferably ΔCTE ≥ 6·10⁻⁶ K⁻¹, CTEₐₘₒᵣₚₕₒᵤₛ being smaller than CTE_{crystalline}.

11. Composite material according to any of the preceding claims, **characterized in that** the width of the joint of amorphous inorganic layer between two crystalline inorganic layers is < 2 mm, preferably < 0.2 mm.

12. Composite material according to any of the preceding claims, **characterized in that** the transparent crystalline layer in the form of a tile has a thickness of > 1 mm,
preferably > 5 mm.

13. Composite material according to any of the preceding claims, **characterized in that** the composite was produced by joining surfaces with a roughness Rₐ < 1 µm,
preferably < 0.1 µm, particularly preferably < 0.01 µm.

14. Use of the composite material according to any of the preceding claims as a display, ballistic protective glass, eyeglass lenses, a watch crystal, a staircase, walk-on glass, a dive computer, a recessed floor light, scanner glass, a visor, a sensor, a camera window, an optical lens, a furnace window, or a machine pane.

## Revendications

1. Matériau composite plat constitué de couches au moins d'un matériau inorganique cristallin transparent, lequel est relié, par liaison de matière, au moyen d'une jonction de bords, à au moins une couche constituée d'au moins un matériau inorganique amorphe, les bords du matériau inorganique amorphe et du matériau inorganique cristallin reposant l'un contre l'autre et le matériau inorganique amorphe étant présent entre les bords du matériau inorganique cristallin,
l'au moins un matériau inorganique cristallin transparent étant choisi parmi les oxydes des composés avec l'Al et/ou le Mg et/ou l'yttrium, les nitrures, les oxynitrures ou les sulfures d'aluminium ou de silicium ; les oxydes constitués de zirconium et/ou d'yttrium ; l'oxynitrure d'aluminium, le sulfure de zinc ; le carbure de silicium, le carbure de bore, le nitrure de bore, le carbone, le plomb-zirconate-titanate ou fluorure dopé au lanthane et constitué de Ca et/ou de Mg et/ou d'aluminium avec jusqu'à 5 % de dopants du groupe des lanthanoïdes ou des actanoïdes ou du fer ou de métaux non ferreux ou des mélanges de ceux-ci,
et la largeur de l'au moins une couche de l'au moins un matériau inorganique amorphe entre deux couches inorganiques cristallines étant > 0,1 mm et < 5 mm.

2. Matériau composite selon l'une des revendications précédentes, **caractérisé en ce que** le matériau inorganique cristallin transparent est choisi parmi les céramiques polycristallines d'oxyde des systèmes Al, Al-Mg, Al-Y, Zr, Zr-Y, AION, de préférence parmi Mg-Al-spinelle, saphir et/ou yttrium-aluminium-grenat.

3. Matériau composite selon l'une des revendications précédentes, **caractérisé en ce que** le matériau inorganique amorphe est un verre choisi parmi les verres crown au lanthane, les verres flint au lanthane, les verres flint lourds au lanthane, les verres flint lourds au baryum, les verres flint lourds et/ou les verres flint au baryum.

4. Matériau composite selon la revendication 4, **caractérisé en ce que** le verre comprend 10 à 50 % en poids d'oxyde de lanthane, 1 à 20 % en poids d'oxyde de calcium, 25 à 45 % en poids d'oxyde de bore et éventuellement de l'oxyde de baryum, de l'oxyde d'antimoine, de l'oxyde de magnésium, de l'oxyde de silicium, de l'oxyde de strontium, de l'oxyde de titane, de l'oxyde de zinc, de l'oxyde d'yttrium, de l'oxyde de zirconium ou leurs mélanges.

5. Matériau composite selon la revendication 4 ou 5, **caractérisé en ce que** l'indice de réfraction du verre diffère de moins de 0,15 (λ 550-650 nm) par rapport à l'indice de réfraction du matériau inorganique cristallin.

6. Matériau composite selon l'une des revendications 4 à 6, **caractérisé en ce que** le verre présente un indice de réfraction > 1,6, de préférence ≥ 1,65 et de manière particulièrement préférée ≥ 1,7.

7. Matériau composite selon l'une des revendications précédentes, **caractérisé en ce que** le matériau inorganique amorphe et/ou le matériau inorganique cristallin dans le matériau composite présentent au moins partiellement une contrainte de compression > 10 MPa, de préférence > 100 MPa et de manière particulièrement préférée > 300 MPa.

8. Matériau composite selon l'une des revendications précédentes, **caractérisé en ce que** le matériau inorganique amorphe présente, lors de la production, une viscosité minimale de log(η) ≤ 15, de préférence de log(η) ≤ 13, de manière particulièrement préférée de log(η) ≤ 8.

9. Matériau composite selon l'une des revendications précédentes, **caractérisé en ce que** le matériau inorganique cristallin présente une surface plus grande que le matériau inorganique amorphe, le rapport de surface amorphe à cristallin étant ≤ 1:2, de préférence ≤ 1:5, de manière particulièrement préférée ≤ 1:10.

10. Matériau composite selon l'une des revendications précédentes, **caractérisé en ce que** les coefficients de dilatation thermique à une température comprise entre les deux températures de 20 et 300 °C et à un rapport volumique du matériau inorganique amorphe au matériau inorganique cristallin < 1, de préférence < 0,2 et de manière particulièrement préférée < 0,1 diffèrent l'un de l'autre de ΔWAK ≥ 0,1·10⁻⁶ K⁻¹, de préférence de ΔWAK ≥ 3·10⁻⁶ K⁻¹, de manière particulièrement préférée de ΔWAK ≥ 6.10⁻⁶ K⁻¹, WAKₐₘₒᵣₚₕ étant inférieur à WAKₖᵣᵢₛₜₐₗₗᵢₙ.

11. Matériau composite selon l'une des revendications précédentes, **caractérisé en ce que** la largeur du joint constitué de la couche inorganique amorphe entre deux couches inorganiques cristallines est < 2 mm, de préférence < 0,2 mm.

12. Matériau composite selon l'une des revendications précédentes, **caractérisé en ce que** la couche cristalline transparente en forme de carreau présente une épaisseur > 1 mm, de préférence > 5 mm.

13. Matériau composite selon l'une des revendications précédentes, **caractérisé en ce que** le composite a été produit par jonction de surfaces à rugosité Rₐ < 1 µm, de préférence < 0,1 µm, de manière particulièrement préférée < 0,01 µm.

14. Utilisation du matériau composite selon l'une des revendications précédentes comme écran, verre de protection balistique, verre de lunettes, verre de montre, sol d'escalier, plancher en verre, ordinateur de plongée, lampadaire intégré, verre de scanner, visière, capteur, caméra fenêtre, lentille optique, fenêtre de four ou vitre de machine.
